# EUROPEAN PATENT APPLICATION

(11) **EP 2 586 563 A2**
(43) Date of publication of application: **01.05.2013**
(21) Application number: 12181105.3
(22) Date of filing: 20.08.2012
(51) Int. Cl.: B23P 15/00, F16B 25/00

(54) **Method of manufacturing Bi-Metal Screw**

(30) Priority: 26.10.2011 TW 100138944
(71) Applicant: Jau Yeou Industry Co., Ltd., Kaohsiung City (TW)
(72) Inventor: Chen, Shiang-Ru, Kaohsiung City (TW); She, Kuo-Feng, Kaohsiung City (TW)
(74) Representative: Baumann, Rüdiger Walter

(57) **Abstract**

A method of manufacturing a bi-metal screw includes steps of: forming a semi-finished bi-metal screw by connecting together a shank portion (1) and a rod portion (2); forming a thread (5) on the semi-finished bi-metal screw; performing an post-cleaning process on the semi-finished bi-metal screw with the thread (5); performing a heat treatment on the semi-finished bi-metal screw, which is processed after the post-cleaning process, in a vacuum furnace to obtain a bi-metal screw having good toughness, hardness, and strength; and performing a surface treatment thereon to make the bi-metal screw have ability to resist corrosion, acid, ultraviolet, and the like.

## Description

### FIELD OF THE INVENTION

The present invention relates to a method of manufacturing a bi-metal screw, and more particularly to a method of manufacturing a bi-metal screw with excellent toughness, hardness, and strength by a heat treatment in a vacuum furnace.

### BACKGROUND OF THE INVENTION

Screws are generally used in industrial machines, transportation vehicles, and buildings. A screw with high strength is usually made of metal, has a cylinder shape or other shape, and is formed with threads on the surface thereof for fastening to a coupling member.

In general, in consideration of processing, carbon steel and alloy steel are the most common material used as the screws. Further, considering the matter that the exposed portion (e.g., screw head) of the screw has to be exposed at the atmosphere for a long time, the screw also should have ability to resist corrosion as well as strength for fastening members. Therefore, a bi-metal screw forming a screw shank with a corrosion resistant material is developed and thus a screw rod thereof with a high strength material is obtained.

### SUMMARY OF THE INVENTION

The conventional bi-metal screw in a prior art is usually performed by a high-frequency or medium-frequency heating treatment in follow-up process to attain an established standard of toughness, hardness, and strength. However, the industrial standard for screw used in machines, transportation vehicles, and buildings is higher and higher with the improvement of technology. The bi-metal screw manufactured by the conventional method is gradually unable to satisfy the higher standard demand.

Therefore, it is an object of the present invention to provide a method of manufacturing a bi-metal screw with excellent toughness, hardness, strength, and corrosion resistance to satisfy demand for high standard.

The present invention overcomes the drawbacks of the prior art, and provides a method of manufacturing a bi-metal screw, comprising: (a) forming a semi-finished bi-metal screw by connecting together a shank portion and a rod portion; (b) forming a thread on the semi-finished bi-metal screw; (c) performing a post-cleaning process on the semi-finished bi-metal screw with the thread; (d) performing a heat treatment on the semi-finished bi-metal screw, which is processed after the post-cleaning process, in a vacuum furnace; and (e) performing a surface treatment on the semi-finished bi-metal screw, which is processed after the heat treatment to obtain a bi-metal screw.

In an embodiment of the present invention, in step (a), the shank portion and the rod portion are formed together by friction welding or resistance welding.

In an embodiment of the present invention, in step (a), one of the shank portion and the rod portion is made of carbon steel and the other thereof is made of stainless steel, one of the shank portion and the rod portion is made of alloy steel and the other thereof is made of stainless steel, or one of the shank portion and the rod portion is made of stainless steel and the other thereof is made of the same or different type of stainless steel.

In an embodiment of the present invention, the method further comprises, between step (a) and step (b), a step of performing a trimming process on the semi-finished bi-metal screw to remove extra flash around the connection part between the shank portion and the rod portion.

In an embodiment of the present invention, the method further comprises, between step (a) and step (b), a step of performing a pre-cleaning process on the semi-finished bi-metal screw.

In an embodiment of the present invention, the method further comprises, before or after step (b), a step of forming a screw tip on an end of the rod portion.

In an embodiment of the present invention, said semi-finished bi-metal screw having the screw tip is formed as a cone point screw, a flat point screw, a self drilling screw, or a thread cutting screw.

In an embodiment of the present invention, the method further comprises, between step (b) and step (c), a step of performing a passivating process on the semi-finished bi-metal screw.

In an embodiment of the present invention, in step (c), the post-cleaning process is selected from the group of an ultrasonic cleaning process, a chemical treatment, and a blast cleaning process.

In an embodiment of the present invention, in step (e), the surface treatment is a coating treatment, a plating treatment, a mechanical zinc plating treatment, a passivating treatment, or a dip-coating treatment.

By means of technical means of the present invention, the present invention eliminates the factors of defective product by selecting the material of the bi-metal screw, high quality of cleanliness, and high quality heat treatment. Thus, the bi-metal screw manufactured by the method of the present invention is better in the hardening performance of the heat treatment and has excellent toughness, hardness, and strength. Further, due to both the shank portion and the rod portion of the bi-metal screw being made of stainless steel and being processed through suitable surface treatment, the bi-metal screw has ability of resisting corrosion and has hardness and strength sufficient for screwing.

### BRIEF DESCRIPTION OF THE DRAWINGS

The structure and the technical means adopted by the present invention to achieve the above and other objects can be best understood by referring to the following detailed description of the preferred embodiments and the accompanying drawings.

FIG. 1 is a flow chat of a method of manufacturing a bi-metal screw of an embodiment according to the present invention;
FIG. 2 is a side view showing a shank portion and a rod portion being formed together by friction welding;
FIG. 3 is a side view of a semi-finished bi-metal screw after friction welding;
FIG. 4 is a side view of a semi-finished bi-metal screw after a trimming process;
FIG. 5 is a side view of a semi-finished bi-metal screw formed with a screw tip; and
FIG. 6 is a side view of a semi-finished bi-metal screw with threads.

### DETAILED DESCRIPTION OF THE PREFERRED EMBODIMENTS

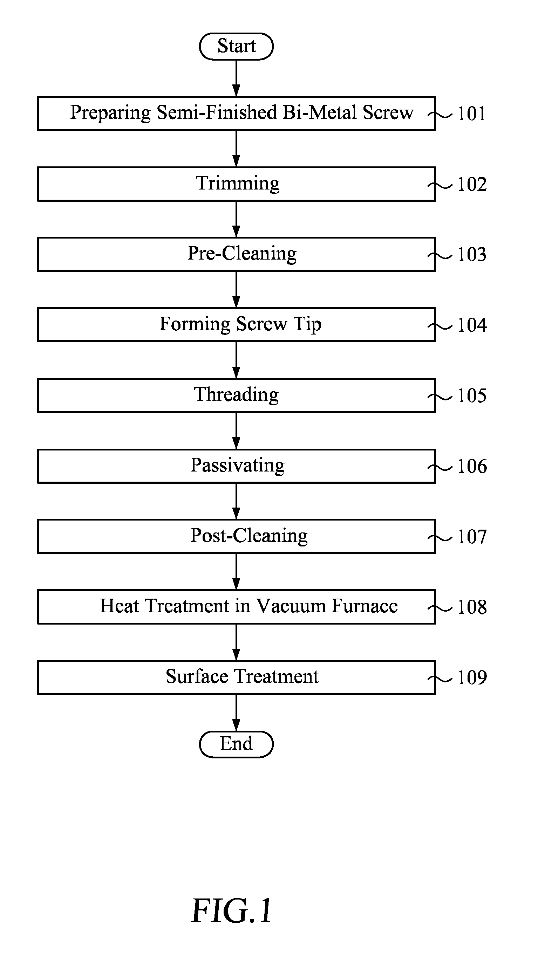

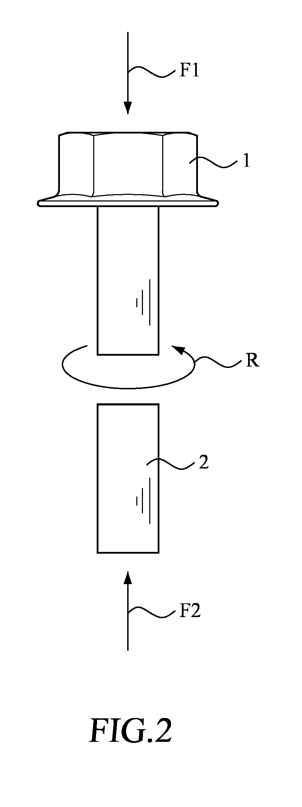

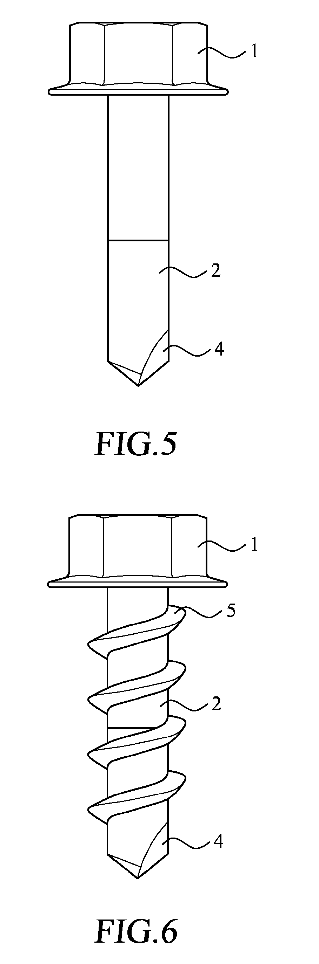

Please refer to FIG. 1, which is a flow chat of a method of manufacturing a bi-metal screw of an embodiment according to the present invention, together reference made to FIGs. 2-6, a description of the method in accordance with the present invention will be given below.

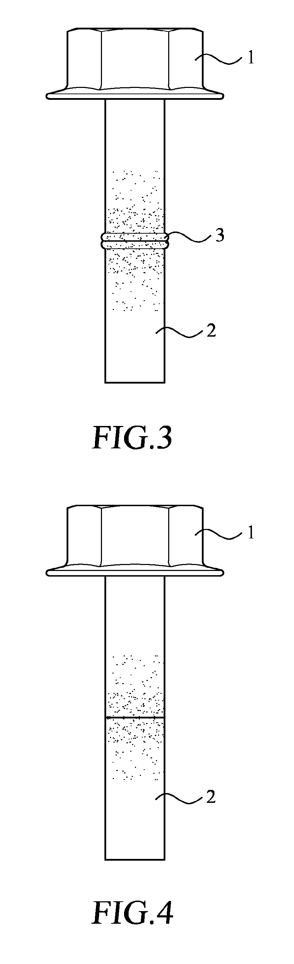

Firstly, a semi-finished bi-metal screw is formed (step 101). As shown in FIGs 2 and 3, the semi-finished bi-metal screw is formed by connecting together a shank portion **1** and a rod portion **2,** wherein the shank portion **1** and the rod portion **2** are preferably made of stainless steel. There are different types of stainless steels, which have different properties. In the present invention, different types or the same type of stainless steel(s) can be used as the shank portion **1** and the rod portion **2** for satisfying different demands as appropriate. Besides, one of the shank portion **1** and the rod portion **2** may be made of carbon steel and the other thereof may be made of stainless steel, one of the shank portion **1** and the rod portion **2** may be made of alloy steel and the other thereof may be made of stainless steel, and so on. In the present invention, the way of connecting the shank portion 1 and the rod portion **2** is not limited to this. Therefore, the way of friction welding, resistance welding, or the like can be used for connecting. In this embodiment, the shank portion **1** and the rod portion **2** are formed together by friction welding. Friction welding is a welding process for connecting materials by pressing force and heat generated from mechanical friction. As shown in detail in FIG. 2, one of the shank portion **1** and the rod portion **2** is fixed and the other thereof rotates by a rotating force **R** while the shank portion **1** and the rod portion **2** are in contact with each other by applying pressing forces **F1** and F2, thus the shank portion 1 and the rod portion **2** are welded together by means of heating and deforming generated from a friction occurring at the contact surface therebetween.

Next, a trimming process is performed on the semi-finished bi-metal screw formed by connecting the shank portion **1** and the rod portion **2.** Trimming is a process for removing and polishing extra flash by a lathe or the like. Because the extra flash **3,** resulted from friction and deforming, is usually formed around the connection part between the shank portion **1** and the rod portion **2** after friction welding, the trimming process can remove the extra flash, so as to make the semi-finished bi-metal screw neat and smooth.

After connecting and trimming, the semi-finished bi-metal screw is subjected to a pre-cleaning process (step 103). Pre-cleaning is used for washing away motes and scraps resulted from the preceding process. In other words, pre-cleaning is generally a process of cleaning the surface of the semi-finished bi-metal screw slightly.

Next, a screw tip **4** is formed on an end of the rod portion **2** (step 104). There are different types of the screw tip **4,** for example, the semi-finished bi-metal screw having the screw tip may be formed as a cone point screw, a flat point screw, a self drilling screw, or a thread cutting screw. The step of forming the screw tip **4** is not necessary. In the case that the screw tip is unnecessary or the rod portion **2** already had a screw tip thereon, this step can be omitted.

Next, forming threads **5** on the semi-finished bi-metal screw (step 105). There are different ways for forming the threads. And, two main ways, cutting thread process and rolling thread process, are frequently used. Cutting thread process in which the processed semi-finished bi-metal screw has more toughness is used in this embodiment. It is noted that although the step of forming threads is performed after forming the screw tip in this embodiment, the present invention is not limited to this. The step of forming threads may be performed before forming the screw tip, that is, the performing order for steps 104 and 105 is exchangeable.

After above process, in the case that the semi-finished bi-metal screw is made of stainless steel, a passivating process may be performed on the semi-finished bi-metal screw to improve ability for resisting corrosion (step 106). Passivating, sometime called acid bath, is a process for removing iron ionization and particles from the surface of metal and creating a film or a passivation layer on metal to against oxidation and corrosion. Further, the passivating process can be also used for brightening the semi-finished bi-metal screw.

Next, a post-cleaning process is performed on the semi-finished bi-metal screw (step 107). The post-cleaning process may be selected from the group of an ultrasonic cleaning process, a chemical treatment, and a blast cleaning process. In this embodiment, the ultrasonic cleaning process is used. Ultrasonic cleaning, an effective cleaning way, is used for making stains coming off from an object surface by an impact force resulted from cavitation. The ultrasonic energy of the ultrasonic cleaning is used, when cleaning, for penetrating slits and holes without the necessity of disassembling components. And the ultrasonic cleaning can achieve a uniform cleanliness regardless the component size and complex structure. Therefore, the cleanliness of the semi-finished bi-metal screw in the follow-up process can be improved by applying ultrasonic cleaning.

Next, a heat treatment is performed on the semi-finished bi-metal screw, which is processed after the ultrasonic cleaning process in a vacuum furnace (step 108). There are different types of the vacuum furnace, and a vacuum carburizing furnace is an example. The atmosphere provided by the vacuum furnace refers to an atmosphere having pressure lower than one standard atmosphere. The heat treatment quality can be improved by performing heat treatment in that atmosphere. In previous steps, the shank portion **1** and the rod portion **2** of the semi-finished bi-metal screw are made of stainless steel, and the ultrasonic cleaning process for high cleanliness is performed before the vacuum heat treatment. Therefore, the hardening performance resulted from the vacuum heat treatment can be improved, and thus a bi-metal screw having excellent toughness, hardness, and strength is obtained.

After above steps, for extending the service life of the bi-metal screw, a surface treatment for protecting the bi-metal screw can be performed (step 109). There are different kinds of surface treatment, such as a coating treatment, a plating treatment, a mechanical zinc plating treatment, a passivating treatment, or a dip-coating treatment. It is advantage in that it allows to selectively choose an appropriate surface treatments, which are used for protecting the surface of the bi-metal screw from damaging, according to different service conditions, processing apparatus, and production cost.

By the method of manufacturing a bi-metal screw of the present invention, the present invention eliminates the factors of defective product by selecting the material of the bi-metal screw, high quality of cleanliness, and high quality heat treatment. Thus, the bi-metal screw manufactured by the method of the present invention is better in the hardening performance of the heat treatment and has excellent toughness, hardness, and strength. Further, due to both the shank portion and the rod portion of the bi-metal screw being made of stainless steel and being processed through suitable surface treatment, the bi-metal screw has ability of resisting corrosion and has hardness and strength sufficient for screwing.

As can be appreciated from the above embodiments, the method of manufacturing a bi-metal screw of the present invention has industry worth which meets the requirement for a patent. The above description should be considered as only the discussion of the preferred embodiments of the present invention. However, a person having ordinary skill in the art may make various modifications to the present invention. Those modifications still fall within the spirit and scope defined by the appended claims.

## Claims

1. A method of manufacturing a bi-metal screw, comprising:
(a) forming a semi-finished bi-metal screw by connecting together a shank portion (1) and a rod portion (2);
(b) forming a thread (5) on the semi-finished bi-metal screw;
(c) performing a post-cleaning process on the semi-finished bi-metal screw with the thread (5);
(d) performing a heat treatment on the semi-finished bi-metal screw, which is processed after the post-cleaning process, in a vacuum furnace; and
(e) performing a surface treatment on the semi-finished bi-metal screw, which is processed after the heat treatment, to obtain a bi-metal screw.

2. The method of manufacturing a bi-metal screw as claimed in claim 1, wherein in step (a), the shank portion (1) and the rod portion (2) are formed together by friction welding or resistance welding.

3. The method of manufacturing a bi-metal screw as claimed in claim 1 or 2, wherein in step (a) one of the shank portion (1) and the rod portion (2) is made of carbon steel and the other thereof is made of stainless steel, one of the shank portion (1) and the rod portion (2) is made of alloy steel and the other thereof is made of stainless steel, or one of the shank portion (1) and the rod portion (2) is made of stainless steel and the other thereof is made of the same or different type of stainless steel.

4. The method of manufacturing a bi-metal screw as claimed in any of claims 1 to 3, further comprising, between step (a) and step (b), a step of performing a trimming process on the semi-finished bi-metal screw to remove extra flash (3) around the connection part between the shank portion (1) and the rod portion (2).

5. The method of manufacturing a bi-metal screw as claimed in any of claims 1 to 4 further comprising, between step (a) and step (b), a step of performing a pre-cleaning process on the semi-finished bi-metal screw.

6. The method of manufacturing a bi-metal screw as claimed in any of claims 1 to 5, further comprising, before or after step (b), a step of forming a screw tip (4) on an end of the rod portion (2).

7. The method of manufacturing a bi-metal screw as claimed in claim 6, wherein the semi-finished bi-metal screw having the screw tip (4) is formed as a cone point screw, a flat point screw, a self drilling screw, or a thread cutting screw.

8. The method of manufacturing a bi-metal screw as claimed in any of claims 1 to 7, further comprising, between step (b) and step (c), a step of performing a passivating process on the semi-finished bi-metal screw.

9. The method of manufacturing a bi-metal screw as claimed in any of claims 1 to 8, wherein in step (c), the post-cleaning process is selected from the group of an ultrasonic cleaning process, a chemical treatment, and a blast cleaning process.

10. The method of manufacturing a bi-metal screw as claimed in any of claims 1 to 9, wherein in step (e), the surface treatment is a coating treatment, a plating treatment, a mechanical zinc plating treatment, a passivating treatment, or a dip-coating treatment.
